# EUROPEAN PATENT APPLICATION

(11) **EP 1 292 052 A1**
(43) Date of publication of application: **12.03.2003**
(21) Application number: 01926003.3
(22) Date of filing: 27.04.2001
(51) Int. Cl.: H04B 10/18, H04J 14/02, G02B 5/28

(54) **OPTICAL DISPERSION COMPENSATING DEVICE AND OPTICAL DISPERSION COMPENSATING METHOD USING THE DEVICE**

(30) Priority: 28.04.2000 JP 2000129267
(71) Applicant: Oyokoden Lab. Co. Ltd., Tokyo 166-0012 (JP); Kikuchi, Kazuro, Yokohama-shi, Kanagawa 223-0056 (JP)
(72) Inventor: KIKUCHI, Kazuro, 1304 Forme Tsunashima Cres Towers, Yokohama-shi, Kanagawa 223-0056 (JP); TAKUSHIMA, Yuichi, Yokohama-shi, Kanagawa 223-0062 (JP); JABLONSKI, Mark Kenneth, OYOKODEN LAB CO., LTD, Toda-shi, Saitama 335-0026 (JP); TANAKA, Yuichi, OYOKODEN LAB CO., LTD., Toda-shi, Saitama 335-0026 (JP); KATAOKA, Haruki, OYOKODEN LAB CO., LTD., Toda-shi, Saitama 335-0026 (JP); FURUKI, Kenji, OYOKODEN LAB CO., LTD., Toda-shi, Saitama 335-0026 (JP); HIGASHI, Noboru, OYOKODEN LAB CO., LTD., Toda-shi, Saitama 335-0026 (JP); SATO, Kazunari, OYOKODEN LAB CO., LTD., Toda-shi, Saitama 335-0026 (JP); YAMASHITA, Shiro, OYOKODEN LAB CO., LTD., Toda-shi, Saitama 335-0026 (JP)
(74) Representative: Simonnet, Christine
(86) International application number: JP0103675
(87) International publication number: WO01084749

(57) **Abstract**

In the past, the occurrence of wavelength dispersion in signals transmitted through optical fibers caused considerable problems in terms of communications at a communications bit rate of 10 Gbps or more, and particularly optical communications at 20 Gbps or more. In order to solve the problems, though various proposals of dispersion compensation method and element have been made for its compensation, any of which did not solve it.

In the present invention, the problems were solved using an optical dispersion compensating element comprising a multi-layer film element. Optical dispersion compensation can be realized using an optical dispersion compensating element having a group velocity delay time vs. wavelength characteristics curve in which the bandwidth is broad and the extreme value of group velocity delay time is large by connecting in series a plurality of elements capable of performing dispersion compensation by utilizing group velocity delay time vs. wavelength characteristics.

## Description

### TECHNICAL FIELD

In the following explanation of the present invention, optical dispersion compensation is simply referred to as dispersion compensation, and an optical dispersion compensating element is simply referred to as a dispersion compensating element.

The present invention relates to a dispersion compensating element comprising an element capable of compensating for wavelength dispersion (hereinafter, also to simply be referred to as dispersion) of the second order or more (to be described later) occurring in a signal light through optical communications using an optical fiber for the transmission path (hereinafter, the element capable of compensating for wavelength dispersion of the second order dispersion is to simply be referred to as an element able to change the second order dispersion or the second order dispersion compensating element also, and while similarly, an element capable of compensating the third order dispersion to be described later is to simply be referred to as an element able to change the third order dispersion or the third order dispersion compensating element also). More detailed, the present invention relates to especially a dispersion compensating element capable of compensating for dispersion of the third order or more, or a dispersion compensating element capable of compensating for dispersion of the second order and the third order. There are also cases in which the dispersion compensating element is only the third order dispersion compensating element described above, cases in which said elements may be composed so as to be capable of not only third order or more dispersion compensation but also second order dispersion compensation, cases in which they may contain a means for changing the incident position of incident light in a direction within the incident surface to be described later, cases in which they are mounted in a case, and cases in which they are in the form of a so-called chip or wafer that is not mounted in a case. The dispersion compensating element of the present invention is able to be an element in each case above-mentioned, and lake various forms according as purpose of application or sale etc.

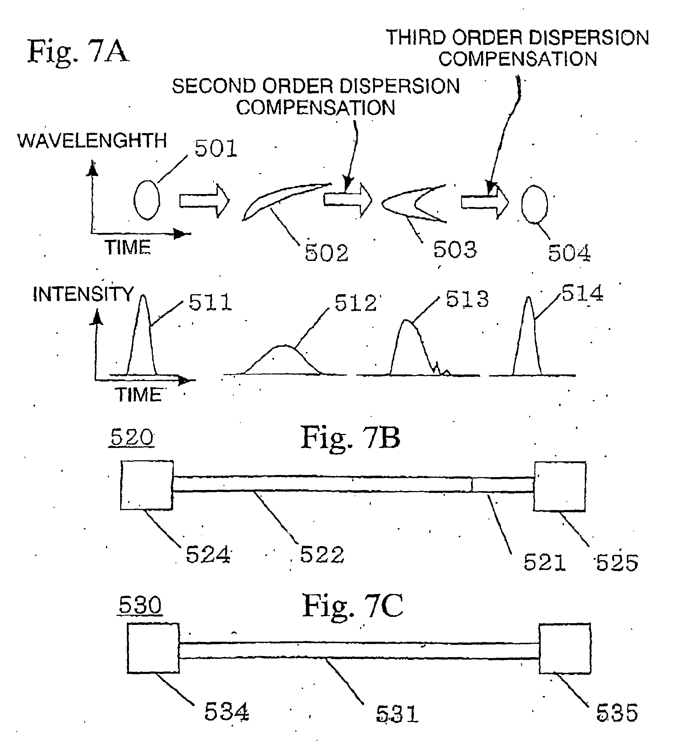

In the present invention, the second order dispersion compensation refers to "compensating the slope of a wavelength versus time characteristics curve to be described later using Fig. 7A" , while the third order dispersion compensation refers to "compensating the curvature of a wavelength versus time characteristics curve to be described later using Fig. 7A".

### BACKGROUND ART

In optical commmications using optical fibers for the communication transmission path, together with progress of the technology used and expansion of the range of utilization, there is a need for increasing distance of the communication transmission path and increasing speed of the communication bit rate. In such an environment, the dispersion that occurs in a signal light transmitting through optical fibers becomes a serious problem, and various attempts have been made to compensate for that dispersion. At the present time, second order dispersion has become a serious problem, and various proposals have been made for its compensation, several of which have been effective to a certain extent.

However, as the demands being placed on optical communications become increasingly severe, compensation of the second order dispersion only during transmission has become insufficient, and compensation of the third order dispersion is becoming an important topic.

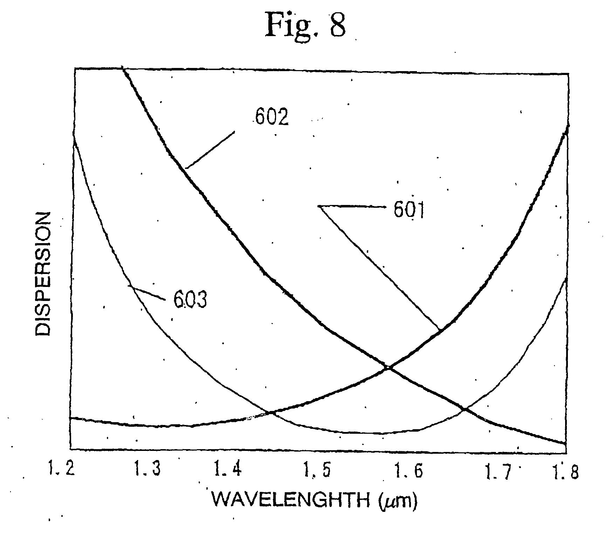

The following provides an explanation of a conventional method of compensating for the second order dispersion using Figs. 7A through 7C and Fig. 8.

Fig. 8 is a drawing that explains the dispersion vs. waveform characteristics of a single mode optical fiber (hereinafter, also to be referred to as SMF), dispersion compensating fiber and dispersion shift fiber (hereinafter, also to be referred to as DSF). In Fig. 8, reference symbol 601 indicates a graph of the dispersion vs. wavelength characteristics of an SMF, reference symbol 602 indicates a graph of the dispersion vs. wavelength characteristics of a dispersion compensating fiber, and reference symbol 603 indicates a graph of the dispersion vs, wavelength characteristics of a DSF. In the graphs, dispersion is plotted on the vertical axis and wavelength is plotted on the horizontal axis.

As is clear in Fig. 8, in the SMF, as the wavelength of the light that is input to the fiber becomes longer from 1.3 µm to 1.8 µm, dispersion increases, while in the dispersion compensating fiber, as the wavelength of the input light becomes longer from 1.3 µm to 1.8 µm, dispersion decreases. In the DSF, as the wavelength of the input light becomes longer from 1.2 µm to around 1.55 µm, dispersion decreases, and as the wavelength of the input light increases from around 1.55 µm to 1.8 µm, dispersion increases. In the DSF, in optical communications at conventional communication bit rate on the order of about 2.5 Gbps (2.5 gigabits per second), dispersion does not present a problem in optical communications for a wavelength of input light around 1.55 µm.

Figs. 7A through 7C are drawings that explain a method of compensating primarily second order dispersion. Fig. 7A explains wavelength vs. time characteristics and optical intensity vs.- time characteristics, Fig. 7B explains a transmission example in which second order dispersion compensation is performed using a dispersion compensating fiber in a transmission path using SMF, while Fig. 7C explains a transmission example in a transmission path composed of only SMF.

In Figs. 7A through 7C, reference symbols 501 and 511 are graphs showing the characteristics of signal light prior to being input into the transmission path, reference symbol 530 indicates a transmission path composed of SMF 531, reference symbols 502 and 512 are graphs showing the characteristics of a signal light in which the signal light having the characteristics shown in graphs 501 and 511 is transmitted along transmission path 530 and output from transmission path 530, reference symbol 520 is a transmission path composed of dispersion compensating fiber 521 and SMF 522, and reference symbols 503 and 513 are graphs showing the characteristics of a signal light in which the signal light having the characteristics shown in graphs 501 and 511 is transmitted along transmission path 520 and output from transmission path 520. Reference symbols 504 and 514 are graphs showing the charactezisacs of signal light when the signal light having the characteristics shown in graphs 501 and 511 is transmitted along transmission path 520, output from transmission path 520, and then subjected to the desirable third order dispersion compensation described later according to the present invention, and closely coincide with graphs 501 and 511. In addition, graphs 501, 502, 503, and 504 each have wavelength plotted on the vertical axis and time (or actual time) plotted on the horizontal axis, while graphs 511, 512, 513, and 514 each have optical intensity plotted on the vertical axis and time (or actual time) plotted on the horizontal axis. Furthermore, reference symbols 524 and 534 indicate transmitters, while reference symbols 525 and 535 indicate receivers.

As was previously described, since in the case of conventional SMF, dispersion increases as the wavelength of the signal light becomes longer from 1.3 µm to 1.8 µm, during high speed communications or long distance transmissions, a delay occurs in the group velocity caused by dispersion. In transmission path 530 composed of an SMF, the signal light is delayed considerably at longer wavelengths more than at shorter wavelengths during transmission, and becomes as shown in graphs 502 and 512. The signal light that is deformed in this way may be unable to be accurately received as a signal light as a result of being unable to be distinguished from the signal light before and after it in, for example, high speed communications or long distance transmissions.

In the past, in order to solve such problems, dispersion was compensated (or corrected) by using, for example, a dispersion compensating fiber as shown in Fig. 7B.

Dispersion compensating fibers of the prior art were made so that dispersion decreased as the wavelength became longer from 1.3 µm to 1.8 µm as previously described in order to solve the problem of SMF in which dispersion increased as the wavelength became longer from 1.3 µm to 1.8 µm. As shown with transmission path 520 of Fig. 7B for example, dispersion compensating fibers can be used by connecting dispersion compensating fiber 521 to SMF 522. In the above transmission path 520, since the signal light is considerably delayed at longer wavelengths as compared with shorter wavelengths in SMF 522, and is then considerably delayed as shorter wavelengths as compared with longer wavelengths in dispersion compensating fiber 521, as shown in graphs 503 and 513, the grade of deformation can be held to a lower level than the deformation indicated in graphs 502 and 512.

However, in a compensation method for the second order wavelength dispersion of the prior art described above that uses a dispersion compensating fiber, dispersion compensation of signal light that has been transmitted along a transmission path cannot be performed in the state of the signal light prior to being input into the transmission path, namely until the shape of graph 501, and that compensation is limited to until the shape of graph 503. As shown in graph 503, in the compensation method for the second order wavelength dispersion of the prior art that uses a dispersion compensating fiber, light having a center wavelength of the signal light is not delayed in comparison with light having a shorter wavelength than the center wavelength of the signal light or light having a longer wavelength than the center wavelength of the signal light, while only the light of components having a shorter wavelength or longer wavelength than the light of the center wavelength component of the signal light is delayed. As shown in graph 513, sometimes ripple may occur in a part of the graph.

These phenomena are becoming serious problems including the prevention of accurate signal reception accompanying greater needs for longer transmission distances and faster communication speeds of optical communications. For example, in the case of high speed communications in which signals are transmitted at a communications bit rate of 40 Gbps (40 gigabits per second) over a distance of 10,000 km or high speed communications in which signals are transmitted at 80 Gbps over a distance on the order of several thousands km, these phenomena are a cause of considerable concern and are viewed as extremely serious problems. In such high speed communications, the use of conventional optical fiber communication systems is considered to be difficult. For example, these phenomena are also becoming a serious problem from an economic standpoint of system construction, for example, such as even resulting in a need to change the material of the optical fibers themselves.

Since it is difficult to compensate for previously mentioned dispersion by the second order dispersion compensation only, and the third order or more dispersion compensation becomes necessary.

In the past, although DSF was used as optical fibers (hereinafter, also to simply be referred to as a fiber) that reduce the second order dispersion for light having a wavelength around 1.55 µm, as is clear from the previously mentioned characteristics of Fig. 7A and Fig. 8, this fiber is not able to compensate the third order dispersion that is an object of the present invention.

In the realization of higher communication speeds and longer communication distances of optical communications, there is a growing awareness that the third order dispersion presents a significant problem, and its compensation is becoming an important topic. Although some attempts have been made to solve the problem of compensation of the third order dispersion, a third order dispersion compensating element or compensation method capable of adequately solving the problems of the prior art is not realized yet.

Although an example of using a fiber formed a diffraction grating pattern has been reported as a method for compensating third the order dispersion, this method has fatal shortcomings such as being not able to achieve the necessary compensation, having large loss, and having a large geometry. Moreover, the fiber is expensive and cannot be expected to be used practically.

As an example of, above-mentioned, the third order dispersion compensation, the inventors of the present invention, independently from the present invention, succeeded in compensation of the third order dispersion to a certain extent by using an optical dispersion compensating element that used a multi-layer film of a dielectric substance and so forth, and it brought a great advance of the optical communications technology of the prior art. However, as a request from the realization of higher communication speeds and longer communication distances of optical communications, in order to ideally perform the. third order dispersion compensation in the case of high speed communications at a communication bit rate of 40 Gbps or 80 Gbps and so forth, or to adequately perform the third order dispersion compensation in multi-channel optical communications, realization of a dispersion compensating element or dispersion compensation method is desired that is able to adequately compensate the second order and the third order dispersion over an even broader wavelength band. As one proposal for this, a third order dispersion compensating element was proposed, independently from the present invention, that is able to select the wavelength band of group velocity delay and the delay time of group velocity delay. In particular, a variable wavelength (namely, allowing selection of the wavelength for dispersion compensation) dispersion compensating element was proposed as one way of inexpensively realizing a practical third order dispersion compensating element that is also suitable for the wavelength of each channel. However, it is quite difficult to obtain a dispersion compensating element having group velocity delay time vs. wavelength characteristics that enable adequate dispersion compensation in broad wavelength bands with such a dispersion compensating elements alone.

In consideration of these points, the purpose of the present invention is to provide an optical dispersion compensating element having superior group velocity delay time vs. wavelength characteristics and capable of performing adequate dispersion compensation, especially the third order dispersion compensation, over a broad wavelength band that was unable to be realized practically in the prior art, that has high reliability, and is in a state that is suitable for mass production, and at low cost Moreover, another object of the present invention is to provide a dispersion compensating element and dispersion compensation method capable of dispersion compensation of the third order or more using a multi-layer film element having a function that is able to select the wavelength band and delay time of group velocity delay, or a dispersion compensating element and dispersion compensation method capable of performing both the second order and the third order dispersion compensation.

### DISCLOSURE OF THE INVENTION

The present invention relate to a dispersion compensating element and also relates to a dispersion compensation method in which dispersion is compensated by composing a dispersion compensating element substantially equal to the above dispersion compensating element of the present invention. Thus, in the following explanation, the contents of the dispersion compensating element of the present invention are explained in a form of a dispersion compensating element used in the dispersion compensation method of the present invention, and also serves as an explanation of a dispersion compensation method.

One of the major characteristic of the dispersion compensating element that can be used in the dispersion compensation method of the present invention is the composing of at least two elements capable of performing dispersion compensation, or at least two portions of element capable of performing dispersion compensation (the above elements capable of performing dispersion compensation and/or portions of elements capable of performing dispersion compensation will hereinafter be generally referred to as elements capable of performing dispersion compensation), by connecting in series along the optical path of a signal light, and to have an element comprising an element comprising multi-layer film (that, hereinafter, is also referred to as a multi-layer film element).

And to achieve the purpose of the present invention, one of the major characteristic of the optical dispersion compensating element that can be used in the optical dispersion compensation method of the present invention is to have an element capable of performing dispersion compensation which is an element capable of performing dispersion compensation using group velocity delay time vs. wavelength characteristics of a multi-layer film, and to have the group velocity delay time vs. wavelength characteristics curve having at least one extreme value of the curve in the dispersion compensation target wavelength band.

The above optical dispersion compensating element of the present invention comprising a mufti-layer film can basically be applied to any wavelength band. The present invention is able to demonstrate extremely significant effects using an optical dispersion compensating element comprising multi-layer film having a group velocity delay time vs. wavelength characteristics curve having at least one extreme value in the wavelength ranges of 1260-1700 nm which is widely noticed. Furthermore, to put it concretely, according to the present invention, it is able to use a dispersion compensating element comprising a multi-layer film having a group velocity delay time vs. wavelength characteristics curve having at least one extreme value in the wavelength ranges of at least one band of O-band (1260-1360 nm), E-band (1360-1460 nm), S-band(1460-1530 nm), C-band (1530-1565 nm), L-band (1565-1625 nm), and U-band (1625-1675 nm), and to perform accurate dispersion compensation in each communication wavelength band.

To achieve the purpose of the present invention, an example of the optical dispersion compensating element that can be used in the optical dispersion compensation method of the present invention is an optical dispersion compensating element characterized by comprising a multi-layer film comprising at least three reflective layers with mutually different optical reflectance and at least two light transmitting layers formed between the reflective layers. Furthermore, the optical dispersion compensating element of the present invention is able to be miniaturized by being packaged in one case.

Furthermore, to achieve the purpose of the present invention, a multi-layer film element comprising at least one of multi-layer films A through Han which will be described later, for an example of the optical dispersion compensating element that can be used in the optical dispersion compensation method of the present invention.

Namely, an example of the optical dispersion compensating element capable of performing dispersion compensation of the present invention comprises a multi-layer film comprising at least five kinds of laminated films with different optical properties ( namely at least five layers of laminated films with different optical properties such as optical reflectance and/or film thickness), the multi-layer film comprising at least three kinds of reflective layers, including at least two kinds of reflective layers with mutually different optical reflectance, and at least two light transmitting layers in addition to the three kinds of reflective layers, each of the three types of reflective layers and each of the two light transmitting layers being alternately disposed, the multi-layer film being composed of a first layer in the form of a first reflective layer, a second layer in the form of a first light transmitting layer, a third layer in the form of a second reflective layer, a fourth layer in the form of a second light transmitting layer, and a fifth layer in the form of a third reflective layer, in that order from one side of the multi-layer film in the direction of film thickness, the film thickness of each layer that composes the multi-layer film in the first through fifth layers when considering as an optical path length for center wavelength λ of the incident light (that, hereinafter, is also simply referred to as an optical path length), being the film thickness of a value within the range of an integer multiple of λ/4 ± 1% (which, hereinafter, is also referred to as an integer multiple of λ/4 or about integer multiple of λ/4), and, the multi-layer film being composed with a plurality of sets of layers combining a layer H, which is a layer having a higher refractive index and a film thickness of 1/4λ (which, hereinafter, is referred to as a film thickness of 1/4λ in terms of a film thickness of 1/4λ ± 1%), and a layer L, which is a layer having a lower refractive index and a film thickness of 1/4λ ; and wherein,
multi-layer film A is taken to be a multi-layer film in which five layers of laminated films, namely first through fifth layers, are respectively formed in order from one side in the direction of thickness of the multi-layer film with a first layer composed by laminating three sets of HL layers in which one layer H and one layer L each are combined in that order as one set of HL layer, a second layer composed by laminating 10 sets of HH layers in which one layer H and one layer H are combined as one set of HH layer, a third layer composed by laminating one layer L and seven sets of HL layers, a fourth layer composed by laminating 38 sets of HH layers, and a fifth layer composed by laminating one layer L and 13 sets of HL layers in that order,
multi-layer film B is taken to be a multi-layer film in which, instead of the second layer formed by laminating 10 sets of HH layers of multi-layer film A, the second layer is formed with a laminated film composed by laminating in order from one side in the direction of thickness of the film, which is the same direction as the case of multi-layer film A, three sets of HH layers, three sets of LL layers in which one layer L and one layer L are combined as one set of LL layer, three sets of HH layers, two sets of LL layers and one set of HH layer in that order,
multi-layer film C is taken to be a multi-layer film in which, instead of the fourth layer formed by laminating 38 sets of HH layers of multi-layer film A or multi-layer film B, the fourth layer is formed with a laminated film composed by laminating in order from one side in the direction of thickness. of the film, which is the same direction as the case of multi-layer film A, three sets of HH layers, three sets of LL layers, three sets of HH layers, three sets of LL layers, three sets of HH layers, three sets of LL layers, three sets of HH layers, three sets of LL layers, three sets of HH layers, three sets of LL layers, three sets of HH layers, three sets of LL layers, three sets of HH layers and three sets of LL layers and two sets of HH layers in that order,
multi-layer film D is taken to be a multi-layer film in which five layers of laminated films, namely first through fifth layers, are respectively formed in order from one side in the direction of thickness of the multi-layer film with a first layer composed by laminating five sets of LH layers in which one layer L and one layer H each are combined in that order as one set of LH layer, a second layer composed by laminating seven sets of LL layers, a third layer composed by laminating one layer H and seven sets of LH layers, a fourth layer composed by laminating 57 sets of LL layers, and a fifth layer composed by laminating one layer H and 13 sets of LH layers in that order,
multi-layer film E is taken to be a multi-layer film in which five layers of laminated films, namely first through fifth layers, are respectively formed in order from one side in the direction of thickness of the multi-layer film with a first layer composed by laminating two sets of HL layers, a second layer composed by laminating 14 sets of HH layers, a third layer composed by laminating one layer L and 6 sets of HL layers, a fourth layer composed by laminating 24 sets of HH layers, and a firth layer composed by laminating one layer L and 13 sets of HL layers in that order,
multi-layer film F is taken to be a multi-layer film in which, instead of the second layer formed by laminating 14 sets of HH layers of multi-layer film E, the second layer is formed with a laminated film composed by laminating in order from one side in the direction of thickness of the film, which is the same direction as the case of multi-layer film E, three sets of HH layers, three sets of LL layers, three sets of HH layers, three sets of LL layers, two sets of HH layers, one set of LL layers and one set of HH layers in that order,
multi-layer film G is taken to be a multi-layer film in which, instead of the fourth layer formed by laminating 24 sets of HH layers of multi-layer film E or multi-layer film F, the fourth layer is formed with a laminated film composed by laminating in order from one side in the direction of thickness of the film, which is the same direction as the case of multi-layer film E, three sets of HH layers, three sets of LL layers, three sets of HH layers, three sets of LL layers, three sets of HH layers, three sets of LL layers, three sets of HH layers, three sets of LL layers, two sets of HH layers, one set of LL layers and one set of HH layers in that order, and
multi-layer film H is taken to be a multi-layer film in which five layers of laminated films, namely first through fifth layers, are respectively formed in order from one side in the direction of thickness of the multi-layer film with a first layer composed by laminating one layer L and four sets of LH layers, a second layer composed by laminating 9 sets of LL layers, a third layer composed by laminating one layer H and six sets of LH layers, a fourth layer composed by laminating 35 sets of LL layers, and a fifth layer composed by laminating one layer H and 13 sets of LH layers.

To achieve the purpose of the present invention, an example of the optical dispersion compensating element that can be used in the optical dispersion compensation method of the present invention is characterized by varying a film thickness of at least one laminated film that composes a multi-layer film in a direction within the surface in a cross section parallel to the incident surface of light of the multi-layer film (which, hereinafter, is also referred to as a direction within the incident surface), namely, wherein film thickness is not uniform in the direction within the incident surface.

Furthermore, to achieve the purpose of the present invention, as an example of the optical dispersion compensating element that can be used in the optical dispersion compensation method of the present invention, an example of the element varying a film thickness of at least one laminated film that composes a multi-layer film in a direction within the incident surface is characterized by comprising an adjustment means that adjusts the film thickness of at least one laminated film of the multi-layer film, or an adjustment means that varies the incident position of light in the incident surface of the multi-layer film, by coupling to an element capable of performing dispersion compensation. The above mentioned adjustment means or means that- changes the incident position can be used for an example of the optical dispersion compensating element in which the film thickness of each laminated film is uniform in a direction within the incident surface (for example, air gap type element).

Although it is clear from the above explanation, an optical dispersion compensation method of the present invention is characterized by dispersion compensation in optical communications using an optical dispersion compensating element comprising an element composed by connecting in series along the optical path of the signal light at least two of elements capable of performing dispersion compensation.

To achieve the purpose of the present invention, an example of the optical dispersion compensation method of the present invention is characcerized by performing dispersion compensation using the optical dispersion compensating element of the present invention having above mentioned many characteristics.

Furthermore, to achieve the purpose of the present invention, an example of the optical dispersion compensation method and/or the optical dispersion compensating element used in the method of the present invention is characterized by performing dispersion compensation which is sometimes mainly a third order dispersion compensation, sometimes mainly a second order dispersion compensation, sometimes mainly both of a second order and a third order dispersion compensation, and by enabling to take various forms and to use various materials described later.

### BRIEF DESCRIPTION OF THE DRAWINGS

Fig. 1 is a drawing explaining an optical dispersion compensation according to the present invention.
Fig. 2 is a cross-sectional view of a multi-layer film according to the present invention.
Fig. 3 is a perspective view of a multi-layer film according to the present invention.
Fig. 4 shows group velocity delay time vs. wavelength characteristics curves of a multi-layer film according to the present invention.
Fig. 5A is a graph representing group velocity delay time vs. wavelength characteristics of a single element capable of performing dispersion compensation according to the present invention.
Fig. 5B is a graph that explains a method for improving group velocity delay time vs. wavelength characteristics using a plurality of elements capable of performing dispersion compensation of the present invention, and represents group velocity delay time vs. wavelength characteristics of an optical dispersion compensating element of the present invention in which two elements capable of performing dispersion compensation are connected in series.
Fig. 5C is a graph that explains a method for improving group velocity delay time vs. wavelength characteristics using a plurality of elements capable of performing dispersion compensation of the present invention, and represents group velocity delay time vs. wavelength characteristics of an optical dispersion compensating element of the present invention in which three elements capable of performing dispersion compensation are connected in series.
Fig. 5D is a graph that explains a method for improving group velocity delay time vs. wavelength characteristics using a plurality of elements capable of performing dispersion compensation of the present invention, and represents group velocity delay time vs. wavelength characteristics of an optical dispersion compensating element of the present invention in which three elements capable of performing dispersion compensation are connected in series.
Fig. 6A is a drawing that explains an example of composing an optical dispersion compensating element of the present invention by connecting two elements capable of performing dispersion compensation in series.
Fig. 6B is a drawing that explains an example of composing an optical dispersion compensating element of the present invention by connecting three elements capable of performing dispersion compensation in series.
Fig. 6C is a drawing that explains an example of composing an optical dispersion compensating element of the present invention by connecting two incident positions of a signal light in series along the path of a signal light on a multi-layer film in which film thickness changes in a direction within the incident surface.
Fig. 6D is a drawing that explains an example of an optical dispersion compensating element of the present invention in which optical dispersion compensating elements are mounted in a single case.
Fig. 7A is a drawing for explaining a compensation method of the second order and the third order wavelength dispersion that explains wavelength vs. time characteristics and optical intensity vs. time characteristics.
Fig. 7B is a drawing that explains a transmission bath.
Fig. 7C is a drawing that explains a transmission path.
Fig. 8 is a graph showing dispersion vs. wavelength characteristics of an optical fiber of the prior art.

### BEST MODE FOR CARRYING OUT THE INVENTION

The following provides an explanation of a mode for carrying out the present invention with reference to the drawings. Furthermore, although each of the drawings used in the explanation schematically shows the dimensions, shape and layout relationship of each constituent component to a degree that enables the present invention to be understood. For the sake of convenience in providing the explanation, those components may be illustrated while partially changing the enlargement factor, and there are cases in which they may not always resemble the actual objects or descriptions of the embodiments and so forth. In addition, in each of the drawings, similar constituent components are indicated by assigning the same reference symbols, and duplicate explanations may be omitted.

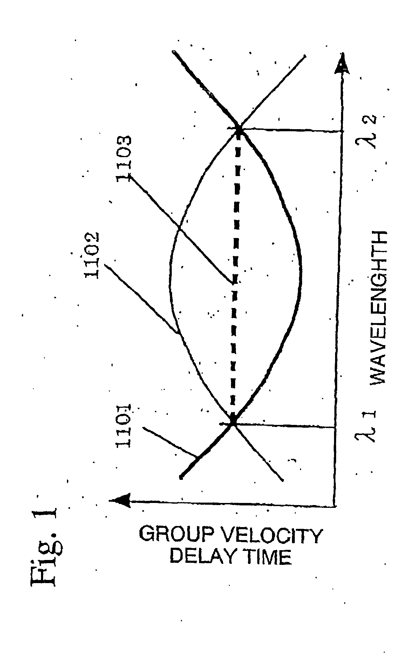

Fig. 1 is a drawing that explains a method for compensating dispersion occurring in communications using an optical fiber for the transmission path with an optical dispersion compensating element Reference symbol 1101 indicates a group velocity delay time vs, wavelength characteristics curve indicating the third order dispersion of a signal light that remains following compensation of the second order dispersion, reference symbol 1102 indicates a group velocity delay time vs. wavelength characteristics curve of a dispersion compensating element, and reference symbol 1103 indicates a group velocity delay time vs. wavelength characteristics curve between compensation target wavelength band λ₁-λ₂ after dispersion of signal light having the dispersion characteristics of curve 1101 has been compensated with a dispersion compensating element having the dispersion characteristics of curve 1102, with group velocity delay time plotted on the vertical axis and wavelength plotted on the horizontal axis.

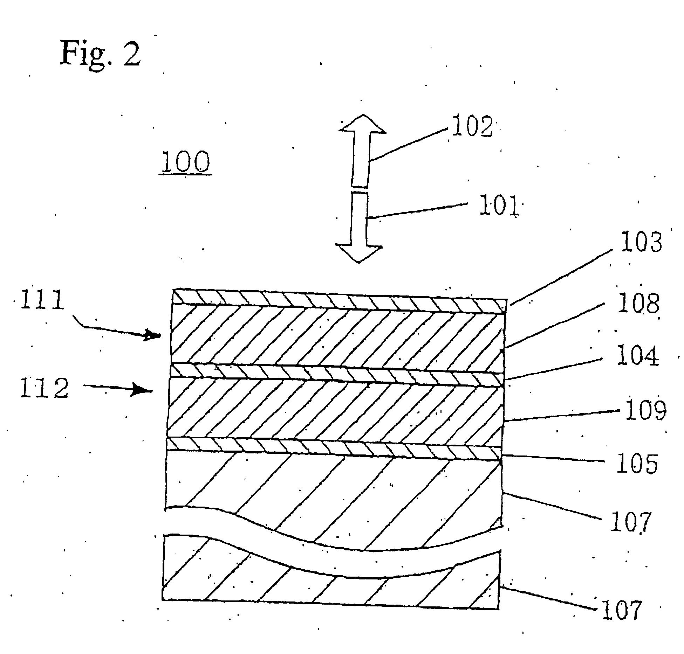

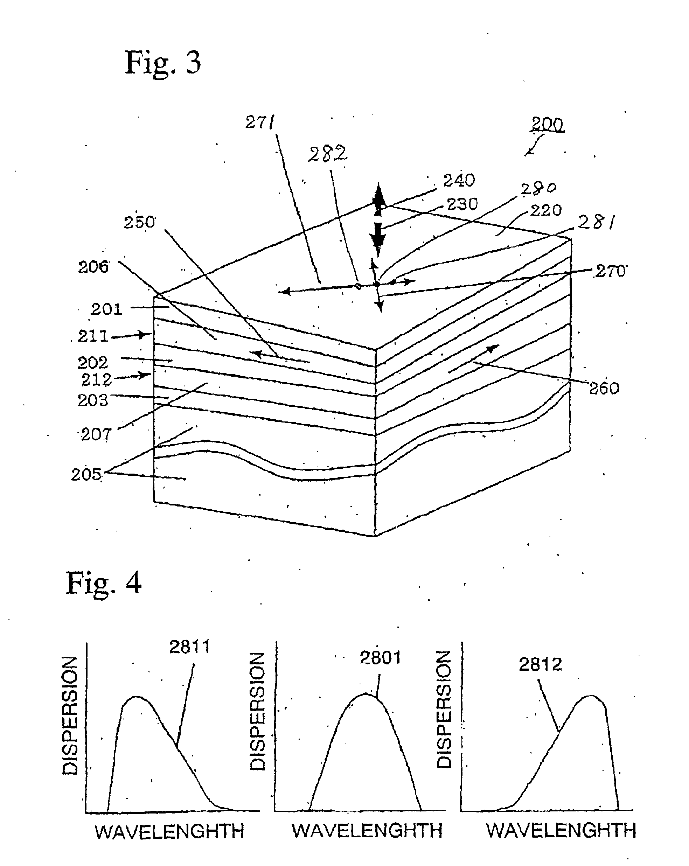

Figs. 2 through 4 are drawings that explain an example of an optical dispersion compensating element according to the present invention. Fig. 2 is a cross-sectional view of a multi-layer film to be described later, Fig. 3 is a perspective view of a multi-layer film in which a film thickness has been changed, and Fig. 4 is an example of a group velocity time delay vs. wavelength characteristics curve of a multi-layer-film.

Fig. 2 is a drawing that provides a schematic explanation of the cross-section of a multi-layer film used as an example of an optical dispersion compensating element for the third order dispersion used in the present invention. In Fig. 2, reference symbol 100 indicates a multi-layer film as an example of an optical dispersion compensating element used in the present invention, reference symbol 101 indicates an arrow showing the direction of incident light, reference symbol 102 indicates an arrow showing the direction of outgoing light, reference symbols 103 and 104 indicate reflective layers (hereinafter to also be referred to as reflective films or light reflecting layers) having reflectance of less than 100%, reference symbol 105 indicates a reflective layer having reflectance of 98-100%, reference symbols 108 and 109 indicate light transmitting layers, reference symbols 111 and 112 indicate cavities. In addition, reference symbol 107 indicates a substrate in which, for example, BK-7 glass is used.

Reflectance R(103), R(104), and R(105) of each reflective layer 103, 104 and 105 of Fig. 2 has the relationship of R(103) ≦ R(104) ≦ R(105). It is preferable in terms of mass production that the reflectance of each reflective layer are set so that it is mutually different at least between a reflective layers located at one side of a light transmitting layer a reflective layers located at the other side of the light transmitting layer. Namely, each reflective layer is formed so that the reflectance of each reflective layer relative to the center wavelength λ of the incident light gradually becomes larger from the side on which incident light enters towards the direction of thickness of the multi-layer film. By composing so that reflectance relative to light of the above wavelength λ of each reflective layer is within the range of 60% ≦ R(103) ≦ 77%, 96% ≦ R(104) ≦ 99.8%, and 98% ≦ R(105), and satisfies the above magnitude relationship of R(103), R(104) and R(105), a group velocity delay time vs. wavelength characteristic curve can be obtained as shown in Fig. 4 and Figs. 5A through 5D will be described later. By more preferably making R(103)< R(104)< R(105), and even more preferably, making R(105) close to 100% or 100%, the performance of the optical dispersion compensating element used in the present invention can be further enhanced.

In order to more greatly facilitate production of optical dispersion compensating element used in the present invention, it is preferable that forming conditions of each reflective layer are preferably selected so that the interval when considered as the optical path length between each adjacent reflective layer is respectively different, then design conditions of the reflectance of each reflective layer can be relaxed, and a multi-layer film used in an optical dispersion compensating element for the third order dispersion used in the present invention can be formed with a combination of unit films having a film thickness of one-fourth wavelength λ (namely, films having a film thickness that is an integral multiple of λ/4), and an optical dispersion compensating element for the third order dispersion having high reliability and excellent mass productivity can be inexpensively provided.

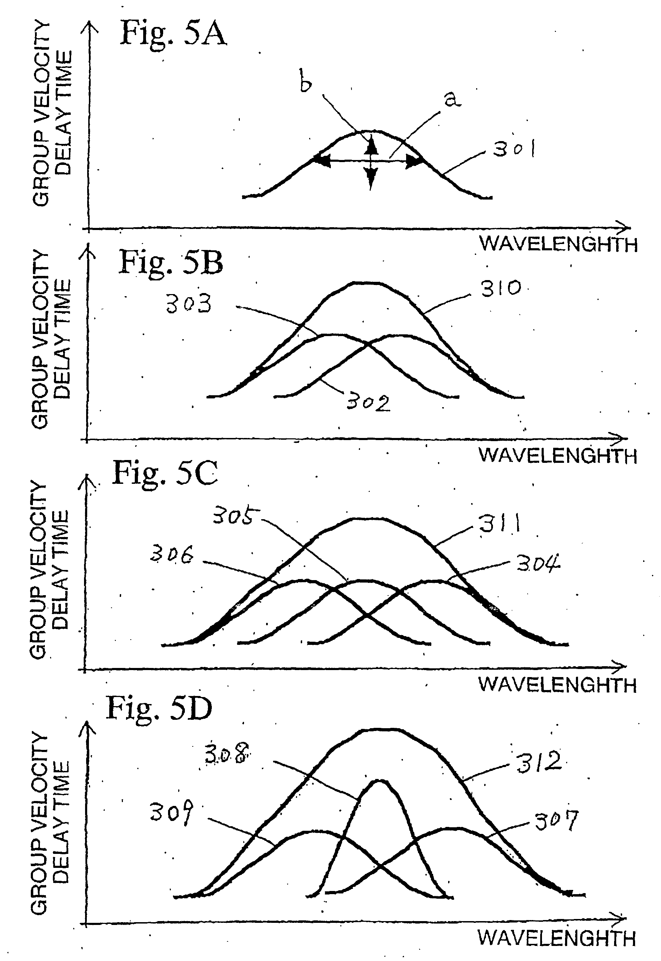

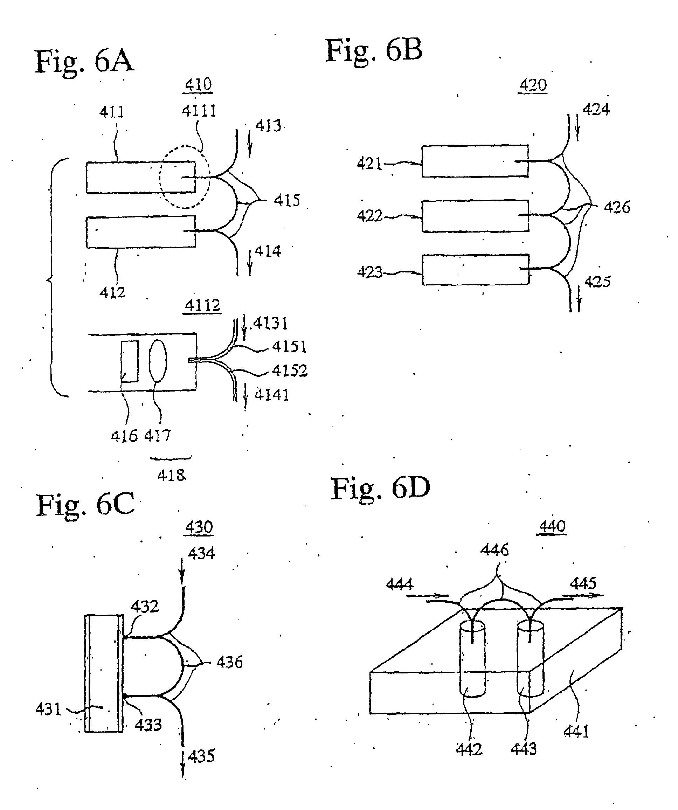

Furthermore, although the film thickness of the unit film of the above-mentioned multi-layer film has been described as being one-fourth wavelength λ, as previously described, this refers to λ/4 within the range of error allowed by film formation in mass production, and in consideration of the current level of multi-layer film forming technology, typically refers to a film thickness of λ/4 as referred to in the present invention in terms of λ/4 ± 1%, and the present invention demonstrates also excellent significant effects in this thickness range of the film. So, the thickness of unit film having thickness in this range is called also thickness of λ/4 in the present invention. In particular, by making the above thickness of the unit films λ/4 ± 0.5% (λ/4 in this case indicates λ/4 in the absence of error), a multi-layer film can be formed that does not impair mass productivity, and has low variation and high reliability, and optical dispersion compensating element to be described later using Fig. 5 and Fig. 6 can be provided inexpensively.

In addition, in the present invention, the formation of a multi-layer film has been explained as laminating unit films having a film thickness of λ/4, and although a multi-layer film can be formed by repeating a process of forming one unit film and then forming the next unit film, formation of a multi-layer film is not limited to this process, but rather films having a film thickness of an integral multiple of λ/4 are typically formed continuously, and this type of multi-layer film is naturally also included in the multi-layer film of the present invention. In actuality, several examples of the multi-layer film of the present invention have been able to be formed using a film formation process in which the above reflective layer and light transmitting layer are formed continuously.

Fig. 3 is a drawing that explains an example of changing the film thickness of multi-layer film in the direction within a plane parallel to incident surface 220 to be described later of the above-mentioned multi-layer film 100 in Fig. 1.

In Fig. 3, reference symbol 200 indicates a multi-layer film as an example of the optical dispersion compensating element of the present invention, reference symbol 201 indicates the first reflective layer, reference symbol 202 indicates the second reflective layer, reference symbol 203 indicates the third reflective layer, reference symbol 205 indicates a substrate, reference symbol 206 indicates the first light transmitting layer, reference symbol 207 indicates the second light transmitting layer, reference symbol 211 indicates the first cavity, reference symbol 212 indicates the second cavity, reference symbol 220 indicates a light incident surface, reference symbol 230 indicates an arrow showing the direction of incident light, reference symbol 240 indicates an arrow showing the direction of outgoing light, reference symbol 250 indicates an arrow showing the direction of the first change in film thickness, reference symbol 260 indicates an arrow showing the second change in film thickness, and reference symbols 270 and 271 indicate arrows showing the directions of movement of the incident position of the incident light

In Fig. 3, the third reflective layer 203, the second light transmitting layer 207, the second reflective layer 202, the first light transmitting layer 206 and the first reflective layer 201 are sequentially formed on substrate 205 using, for example, BK-7 glass (trade name; of manufactured by Schott AG, Germany).

Multi-layer film is formed so that the thickness of the first light transmitting layer 206 changes in the direction shown with arrow 250 of Fig. 3 (gradually becoming thicker from right to left in the figure), and so that the thickness of the second light transmitting layer 207 changes in the direction shown with arrow 260 (gradually becoming thicker from the front to the back in the figure). The thickness of the first through the third reflective layers are formed so as to be composed such that the reflectance of each of the first, the second and the third reflective layers satisfies the conditions complying with the above-mentioned relationship of the above R(103), R(104) and R(105), when the wavelength when the first and second cavity resonance wavelengths coincide has coincided with the center wavelength λ of the incident light

Fig. 4 provides an explanation of a condition in which group velocity delay time vs. wavelength characteristics curve changes when the incident position of incident light has moved in the direction of arrow 270 or arrow 271 of Fig. 3 as described later so as to allow incident light to enter from the direction of arrow 230 of Fig. 3 and obtain outgoing light in the direction of arrow 240 in incident surface 220 of multi-layer film (hereinafter, to also be referred to as an optical dispersion compensating element) 200 as an example of the optical dispersion compensating element of the present invention.

Fig. 4 indicates group velocity delay time vs. wavelength characteristics curves when incident light of center wavelength λ has entered at incident positions 280 through 282 of Fig. 3, with group velocity delay time plotted on the vertical axis and wavelength plotted on the horizontal axis.

By suitably selecting the conditions by which film thickness changes in the directions of arrows 250 and 260 of reflective layers 201-203 and light transmitting layers 206 and 207, band center wavelength λ₀ of group velocity delay time vs. wavelength characteristics curve (for example, the wavelength that imparts an extreme value in group velocity delay time vs. wavelength characteristics curve 2801 having a roughly laterally symmetrical shape of Fig. 4) changes while maintaining the shape of group velocity delay time vs. wavelength characteristics curve in nearly the same shape, and when the above-mentioned incident position is moved from that position in the direction indicated with arrow 271, the above-mentioned wavelength λ₀ hardly changes at all, while the shape of group velocity delay time vs. wavelength characteristics curve can be changed in the manner of curves 2811 and 2812 of Fig. 4. Each curve of Fig. 4 is the curve when the film has been formed on condition which the film thickness increase monotonously in the direction of arrows 250 and 260.

Although each band center wavelength λ₀ in curves 2801-2812 is set to, for example, the location of a suitable wavelength in the graphs of Fig. 4 according to the objective of dispersion compensation, it may also be, for example, nearly the central value of the wavelength range of the curves shown in Fig. 4, and may be suitably determined according to the objective of dispersion compensation. Furthermore, even if it is not described here, as a matter of course, corresponding relationships of each characteristic point of the curve, such as each extreme value wavelength of the curve between the curve 2801-2812 should be investigated in advance.

In this manner, by, for example, first moving and determining the incident position of incident light in the direction of arrow 270 so as to coincide the band center wavelength λο of the dispersion compensating element with the center wavelength λ of the incident light to be compensated for dispersion, selecting the shape of the group velocity delay time vs. wavelength characteristics curve used for dispersion compensation from, for example, curves indicated in Fig. 4 by conforming to the ensured contents to be compensated for dispersion, namely the dispersion status of the incident light, and selecting the above incident position in the direction shown in arrow 271 of Fig. 3 in the manner of, for example, each of the points indicated with reference symbols 280-282, dispersion compensation required by the signal light can be performed effectively.

As is also clear from the shape of the group velocity delay time vs. wavelength characteristics curves of Fig. 4, the third order dispersion compensation can be performed by using the optical dispersion compensating element of the present invention, for example, by using curve 2801 and trace dispersion compensation of the second order dispersion can be performed by using a portion near the comparatively linear portion of curve 2811 or curve 2812.

Although the above explanation using Figs. 2 through 4 has focused on "an element capable of performing dispersion compensation" used in the present invention, it is obvious from above explanation for each curve of Fig. 4 that the use of this "element capable of performing dispersion compensation" makes it possible to compensate third order dispersion in a certain extent

However, although it is comparatively easy to make the wavelength bandwidth of dispersion compensation that can be compensated with the "element capable of performing dispersion compensation" alone about 1.5 nm and the group velocity delay time about 3 ps (picoseconds) for signal light in the wavelength rang of around 1.55 µm, when an attempt is made to widen the wavelength bandwidth of dispersion compensation in order to perform dispersion compensation for multi-channel optical communications, it is difficult to obtain group velocity delay time of a degree that allows dispersion compensation to be performed adequately, and further improvements are desired for greater ease of use and broader use of actual communications. Therefore, a more detailed explanation of the present invention is provided using Figs. 5A through 5D and Figs. 6A through 6D.

Figs. 5A through 5D provide an explanation of a method for improving the group velocity delay time vs. wavelength characteristics using a plurality of elements capable of performing dispersion compensation. Fig. 5A shows a graph of the group velocity delay time vs. wavelength characteristics of a single element capable of performing dispersion compensation used in the present invention. Fig. 5B shows a graph of the group velocity delay time vs. wavelength characteristics of an optical dispersion compensating element of the present invention composed of two elements in which said two elements are connected in series that are capable of performing dispersion compensation in which the shapes of the group velocity delay time vs. wavelength characteristics curves are nearly the same, but the wavelengths that impart the peak values (hereinafter, to also be referred to as the extreme values) of the group velocity delay time vs. wavelength characteristics curves (hereinafter to also be referred to as the extreme value wavelengths) are different Fig. 5C shows a graph of the group velocity delay time vs. wavelength characteristics of an optical dispersion compensating element of the present invention composed of three elements in which said three elements are connected in series that are capable of performing dispersion compensation in which the shape of group velocity delay time vs. wavelength characteristics curves are nearly the same, but the extreme value wavelengths are different. Fig. 5D shows graph of the group velocity delay time vs. wavelength characteristics of an optical dispersion compensating element of the present invention composed of three elements in which said three elements are connected in series that are capable of performing dispersion compensation in which the shapes of the group velocity delay time vs. wavelength characteristics curves as well as the extreme value wavelengths are different. In these graphs, group velocity delay time is plotted on the vertical axis and wavelength is plotted on the horizontal axis.

In Figs. 5A through 5D, reference symbols 301 through 309 indicate each group velocity delay time vs. wavelength characteristics curve of a single element capable of performing dispersion compensation used in the present invention, reference symbol 310 shows a group velocity delay time vs. wavelength characteristics curve in the case of connecting in series two elements capable of performing dispersion compensation of the present invention having nearly the same shape of group velocity delay time vs. wavelength characteristics curves but different extreme value wavelengths, reference symbol 311 shows a group velocity delay time vs. wavelength characteristics curve in the case of connecting in series three elements capable of performing dispersion compensation of the present invention having nearly the same shape of group velocity delay time vs. wavelength characteristics curves but different extreme value wavelengths, and reference symbol 312 shows a group velocity delay time vs. wavelength characteristics curve in the case of connecting in series three elements capable of performing dispersion compensation of the present invention having different shapes of group velocity delay time vs. wavelength characteristics curves and different extreme value wavelengths. Reference symbol a in Fig. 5A indicates the dispersion compensation target wavelength band, while reference symbol b indicates the extreme value of the group velocity delay time.

In Figs. 5B and 5C, the extreme value of group velocity delay time of group velocity delay time vs. wavelength characteristics curve 310 is 1.6 times the case of a single element capable of performing dispersion compensation, and the dispersion compensation target wavelength band is about 1.8 times the case of a single element capable of performing dispersion compensation. The extreme value of group velocity delay time of group velocity delay time vs. wavelength characteristics curve 311 is about 2.3 times the case of a single element, and the dispersion compensation target wavelength band is about 2.5 times the case of a single element capable of performing dispersion compensation. In Fig. 5D, the extreme value of group velocity delay time of the curve of group velocity delay time vs. wavelength characteristics curve 312 is about 3 times the case of a single element capable of performing dispersion compensation, and the dispersion compensation target wavelength band is about 2.3 times the case of a single element capable of performing dispersion compensation.

The extreme value of group velocity delay time and the dispersion compensation target wavelength band of the group velocity delay time vs. wavelength characteristics curve of an element capable of performing dispersion compensation using a multi-layer film as explained in Figs. 2 through 4 vary according to the compositional conditions of each reflective layer and each light transmitting layer of the above-mentioned multi-layer film, and an elements capable of performing dispersion compensation having various characteristics such as, for example, a group velocity delay time vs. wavelength characteristics curve in which the dispersion compensation target wavelength band is comparatively wide but the extreme value of group velocity delay time is not so large as in curve 307 of Fig. SD, or a group velocity delay time vs. wavelength characteristics curve in which the dispersion compensation target wavelength band is narrow but the extreme value of group velocity delay time is large as in curve 308 can be realized.

Multi-layer film A through multi-layer film H described in the previous section of "disclosure of the invention" are examples of such a multi-layer film used in an element capable of performing dispersion compensation. When elements capable of performing wavelength dispersion were produced using these multi-layer films A through H, group velocity delay time vs, wavelength characteristics curves were able to be realized in which the extreme value of group velocity delay time was 3 ps (picoseconds) and the dispersion compensation target wavelength band was 1.3-2.0 nm with respect to signal light of about 1.55 µm.

An optical dispersion compensating element in which the dispersion compensation target wavelength band is 15 nm that has group velocity delay time vs. wavelength characteristics enabling compensation of dispersion due to optical fiber transmission was realized by connecting in series a plurality of above-mentioned elements capable of performing dispersion compensation. When optical communications were carried out over a transmission distance of 60 km by 40 Gbps using above-mentioned dispersion compensating element as an element capable of performing the third order dispersion compensation of a 30-channel communications system in which signal light wavelength was around 1.55 µm and the band wavelength width of each channel was 0.5 nm, the communications were able to be carried out without any interference by the third order dispersion.

In addition, by making suitable contrivances to select combination way of the elements having group velocity delay time vs. wavelength characteristics of the element capable of performing dispersion compensation that was composed by connecting in series, such as element showing the group velocity delay time vs. wavelength characteristics curve in Fig. 4, the group velocity delay time vs. wavelength characteristics curve of a different shape in Fig. 5D and so on, not only the third order dispersion, but also the second order dispersion were compensated.

In an example of an optical dispersion compensating element in which at least two elements capable of performing dispersion compensation of the present invention are connected in series, in order to realize an optical dispersion compensating element having group velocity delay time vs. wavelength characteristics required to compensate dispersion of the third order or more, it is desirable to be used at least one element capable of performing wavelength dispersion having a group velocity delay time vs. wavelength characteristics curve in which the extreme value of the curve is in the dispersion compensation target wavelength band.

In addition, in order to more effectively perform dispersion compensation of a communication transmission path, it is desirable to improve the group velocity delay time vs. wavelength characteristics curve of the optical dispersion compensating element. As one method of accomplishing this, a means is used that is capable of adjusting the group velocity delay time vs. wavelength characteristics of the element capable of performing dispersion compensation.

As an example of such method, it is mentioned to change group velocity delay time vs. wavelength characteristics of an element capable of performing dispersion compensation by changing film thickness of the light transmitting layers and reflective layers of a multi-layer film in a direction within the incident surface as explained by using Figs. 2 and 3, and by changing the relative incident position of signal light in an element capable of performing dispersion compensation. A means for changing the incident position of the incident light is realized by moving at least one of either optical dispersion compensating element 200 or the incident light relative to the position of the incident light. Various means for moving the above optical dispersion compensating element or incident light can be selected according to the particular circumstances, such as the conditions under which the optical dispersion compensating element is used, its cost and its characteristics. For example, a method in which movement is carried out by a manual means such as screws can be used in consideration of costs or the apparatus, or in order to make accurate adjustments or in order to allow adjustments to be made when unable to make adjustments manually, the use of an electromagnetic step motor or continuous drive motor is effective. In addition, the use of a piezoelectric motor using PZT (lead zirconate titanate) is also effective. In addition, by using a prism or dual core collimator that allows above-mentioned methods to be combined, or by selecting the incident position by an optical means such as the use of an optical waveguide, the incident position can be selected easily and accurately.

Each layer of a multi-layer film of an element capable of performing dispersion compensation used for the above optical wavelength dispersion compensating element of the present invention is composed of layer L, which is formed with a film produced by ion assist deposition (to also be referred to as an ion assist film) of SiO₂ having a thickness of a quarter wavelength, and layer H, which is formed with an ion assist film of TiO₂ having a thickness of a quarter wavelength. A layer that combines one layer of the above SiO2 ion assist film (layer L) and one layer of the TiO₂ ion assist film (layer H) is referred to as. one set of an LH layer, and for example, "laminating five sets of LH layers" means to layering each layer, one layer at a time, in the order of layer L, layer H, layer L, layer H, layer L, layer H, layer L, layer H, layer L and layer H.

Similarly, the previously described LL layer means to one set of an LL layer formed by layering two layers L composed of an SiO₃ ion assist film having a thickness of a quarter wavelength. Thus, "laminating three sets of LL layers", for example, means to layering six layers L.

Furthermore, although the example of a dielectric was indicated for the composition of the film that forms layer H, the present invention is not limited to this, but rather examples of dielectric materials identical to TiO₂ in addition to TiO₂ that can be used include Ta₂O₅ and Nb₂O₅. Moreover, in addition to dielectric materials, layer H can also be formed by using Si or Ge. In the case of forming layer H by using Si or Ge, there is the advantage of being able to reduce the thickness of layer H according to its optical characteristics. In addition, although the example of SiO₂ was indicated for the composition of layer L, and SiO₂ offers the advantages of being able to form layer L inexpensively and reliably, the present invention is not limited to this, but rather if layer L is formed by a material having a refractive index lower than the refractive index of layer H, an optical dispersion compensating element can be realized that demonstrates the above effects of the present invention.

In addition, in the present embodiment, although layer L and layer H that compose the above-mentioned multi-layer film were formed by ion assist deposition, the present invention is not limited to this, but rather the present invention demonstrates significant effects even if using a multi-layer film formed by other methods such as ordinary vaporized deposition, sputtering and ion plating.

The optical dispersion compensating element of the present invention can be used by suitably holding that in the shape of a wafer as in multi-layer film 200 shown as an optical dispersion compensating element in Fig. 3. In addition, the optical dispersion compensating element is able to be used as an optical dispersion compensating element by forming into the shape of a chip by cutting into small portions, for example, vertically in the direction of thickness, namely, the direction from incident surface 220 to substrate 205, so as to include the portion required on incident surface 220, and, for example, by mounting in a cylindrical case with, for example, a fiber collimator. In any of these cases, the major effects explained in the present invention are demonstrated.

Fig. 6A through Fig. 6D show drawings for explaining examples of dispersion compensating element of the present invention. Fig. 6A shows an example of composing an optical dispersion compensating element by connecting two of the above-mentioned elements capable of performing dispersion compensation in series. Fig. 6B shows an example of composing an optical dispersion compensating element by connecting three of the above-mentioned elements capable of performing dispersion compensation in series. Fig. 6C shows an example of composing an optical dispersion compensating element by connecting two incident positions of signal light in series along the optical path of the signal light on a multi-layer film in which film thickness changes in a direction within the incident surface. Fig. 6D shows an example of mounting an optical dispersion compensating element composed in the same manner as Fig. 6A in a single case.

In Figs. 6A through 6D, reference symbols 410, 420, 430, and 440 indicate respectively optical dispersion compensating element of the present invention composed, reference symbols 411, 412, 421-423, 442, and 443 indicate respectively element capable of performing dispersion compensation, reference symbol 416 indicates a multi-layer film used in an element capable of performing dispersion compensation, reference symbols 415, 4151, 4152, 426, 436, and 446 indicate optical fibers, reference symbols 413, 4131, 414, 4141, 424, 425, 434, 435, 444, and 445 indicate respectively arrows showing the direction of progress of signal light, reference symbol 417 indicates a lens, reference symbol 418 indicates a dual core collimator composed with lens 417 and optical fibers 4151 and 4152, reference symbol 441 indicates a case, reference symbol 431 indicates an element capable of performing dispersion compensation in the form of a wafer composed so as to be able to perform dispersion compensation by forming a multi-layer film, in which film thickness changes in a detection within the incident surface, on a substrate, and reference symbols 432 and 433 respectively indicate "a portion of an element capable of performing dispersion compensation" .

In Fig. 6A, signal light, that has entered toward the direction indicated by arrow 413, enters element 411 capable of performing dispersion compensation, is emitted from element 411 capable of performing dispersion compensation after subjected to dispersion compensation, by being transmitted through optical fiber 415 enters element 412 capable of performing dispersion compensation, is emitted from element 412 capable of performing dispersion compensation after again being subjected to dispersion compensation, and is transmitted through optical fiber 415 in the direction of arrow 414.

Reference symbol 4112 indicates the portion surrounded by'broken line 4111 of element 411 capable of performing dispersion compensation, and is a cross-sectional drawing that explains its internal structure. Optical fibers 4151, 4152 and lens 417 compose dual core collimator 418, and signal light that has proceeded through optical fiber 4151 in the direction of arrow 4131 passes through lens 417 and enters multi-layer film 416.

Multi-layer film 416 has group velocity delay time vs. wavelength characteristics as shown in Fig. 5A. Signal light that has entered multi-layer film 416 through optical fiber 4151 and lens 417 is subjected 10 the third order dispersion compensation, again passes through lens 417, enters optical fiber 4152, proceeds in the direction of arrow 4141, and enters element 412 capable of performing dispersion compensation. Signal light that has been further subjected to dispersion compensation by element 412 capable of performing dispersion compensation is emitted from element 412 capable of performing dispersion compensation and proceeds through optical fiber 415 in the direction shown with arrow 414.

Such optical dispersion compensating element 410 shown in Fig. 6A has the group velocity delay time vs. wavelength characteristics shown in Fig. 5B, and signal light that has entered optical dispersion compensating element 410 is subjected to dispersion compensation corresponding to a group velocity delay time vs. wavelength characteristics curve like that shown in Fig. 5B, and is emitted from optical dispersion compensating element 410.

In optical dispersion compensating element 420 of Fig. 6B, similarly, signal light which has entered optical dispersion compensating element 420 from the direction of arrow 424, in a process in which signal light sequentially enters elements 421-423 capable of performing dispersion compensation and is emitted from elements 421-423 capable of performing dispersion compensation, is subjected to dispersion compensation corresponding to a group velocity delay time vs. wavelength characteristics curve, for example, as shown in Fig. 5C, is emitted from optical dispersion compensating element 420 and proceeds through optical fiber 426 in the direction shown with arrow 425.

Fig. 6C shows optical dispersion compensating element 430 as an example of connecting in series along the optical path of a signal light "portions 432 and 433 of element 431 capable of performing dispersion compensation" formed on the same wafer instead of elements 411 and 412 capable of performing dispersion compensation of Fig. 6A, and the manner of being subjected to dispersion compensation is similar to that explained with respect to Fig. 6A. However, it is clear from the above explanation that the manner and level of being subjected to dispersion compensation differ according to the group velocity delay time vs. wavelength characteristics of the elements capable of performing dispersion compensation.

Fig. 6D shows the composing of optical dispersion compensating element 440 by packaging elements 442 and 443 capable of performing dispersion compensation similar to Fig. 6A in the same case 441. Although not shown in the drawing, element 443 capable of performing dispersion compensation is composed of a multi-layer film in which film thickness changes in a direction within the incident surface of the multi-layer film explained using Fig. 3, and has a means that adjusts the incident position. Although that incident position adjustment means is not illustrated, it is able to adjust incident position using a control circuit provided in case 441.

As a result of compensating dispersion in a communication system performing communications at a communication bit rate of 40 Gbps over a transmission distance of 60 km using above-mentioned optical dispersion compensating element according to the present invention, in addition to being able to perform extremely satisfactory dispersion compensation, loss resulting from signal light passing through the optical dispersion compensating element was such low level that is less than I dB. Such loss is extremely low compared with the case, in which loss is 3-6 dB, of performing dispersion compensation with only a dispersion compensating element for the second order using fiber grating of the prior art.

Although the above has provided an explanation of an optical dispersion compensation method using the optical dispersion compensating element of the present invention while focusing primarily on the optical dispersion compensating element of the present invention, one of the most noteworthy characteristic of the optical dispersion compensation method of the present invention is that the best compensation according to conditions under which communication is carried out is able to be performed by composing the optical dispersion compensating element which has a group velocity delay time vs. wavelength characteristics curve having at least one extreme value in at least one wavelength range of wide wavelength ranges of 1260-1360 nm, 1360-1460 nm, 1460-1530 nm, 1530-1565 nm, 1565-1625 nm, and 1625-1675 nm by connecting in series a plurality of elements capable of performing dispersion compensation, and that, furthermore, in the aggregate of dispersion compensating elements, is able to compose the dispersion compensating element which has a group velocity delay time vs. wavelength characteristics curve having the extreme value at plural wavelength in a wavelength range of 1260-1700 nm by, for example, using function to be able to select by switch. Finally, the use of the optical dispersion compensating element and optical dispersion compensation method of the present invention have significant socioeconomic effects as a result of enabling the use of numerous existing optical communication systems. Making good use of above-mentioned flexibility of the present invention, the present invention allows to perform the second order and the third order dispersion compensation which is required in actual communication, to be carried out high speed, long distance communication using many of existing optical communication systems.

### INDUSTRIAL APPLICABILITY

Although the above has provided a detailed explanation of the present invention, according to the present invention, in addition to being able to perform satisfactory dispersion compensation of each channel by making available various group velocity delay time vs. wavelength characteristics curves using Figs. 5B through 5D, satisfactory dispersion compensation can be performed for multiple channels. In addition to the dispersion compensation according to the optical dispersion compensating element of the present invention demonstrating particularly significant effects in the third order or more dispersion compensation, it is also capable of performing the second order dispersion compensation by suitably adjusting the group velocity delay time vs. wavelength characteristics.

The present invention is indispensable for the practical application of high speed, long distance optical communications such as that over a transmission distance of 10,000 km at a communication bit rate of 40 Gbps, has a wide utilization range and greatly contributes to the development of the optical communication field.

Since the optical dispersion compensating element using a special multi-layer film according to the present invention is compact and suited for volume production, and can be provided at a low price, its contribution to the development of optical communications is extremely significant.

Finally, the use of the optical dispersion compensating element and optical dispersion compensation method of the present invention have significant social and economical effects as a result of enabling the use of numerous existing optical communication systems.

## Claims

1. An optical dispersion compensating element used in optical communications using optical fiber for communication transmission path, which is capable of compensating dispersion in the form of wavelength dispersion (which, hereinafter, is also simply referred to as dispersion); wherein the optical dispersion compensating element comprises an element comprising an element comprising multi-layer film (that, hereinafter, is also referred to as a multi-layer film element), and is composed by connecting at least two multi-layer film elements capable of performing dispersion compensation, or at least two portions of the multi-layer film element capable of performing dispersion compensation (the above elements capable of performing dispersion compensation and portions of elements capable of performing dispersion compensation will hereinafter be generally referred to as elements capable of performing dispersion compensation), in series along optical path of signal light.

2. The optical dispersion compensating element according to claim 1, wherein the optical dispersion compensating element composed by connecting a plurality of elements capable of performing dispersion compensation is composed so as to have a group velocity delay time vs. wavelength characteristics curve having at least one extreme value in at least one wavelength range of incident light of wavelength ranges of 1260-1360 nm, 1360-1460 nm, 1460-1530 nm, 1530-1565 nm, 1565-1625 nm, and 1625-1675 nm.

3. The optical dispersion compensating element according to claim 1, wherein the multi-layer film has at least three reflective layers with mutually different optical reflectance and at least two light transmitting layers formed between the reflective layers.

4. The optical dispersion compensating element according to claim 1, wherein the optical dispersion compensating element is packaged in one case.

5. The optical dispersion compensating element according to claim 3, wherein the element capable of performing dispersion compensation comprises a multi-layer film comprising at least five kinds of laminated films with different optical properties (namely at least five layers of laminated films with different optical properties such as optical reflectance and/or film thickness), the multi-layer film comprising at least three kinds of reflective layers, including at least two kinds of reflective layers with mutually different optical reflectance, and at least two light transmitting layers in addition to the three kinds of reflective layers, each of the three types of reflective layers and each of the two light transmitting layers being alternately disposed, the multi-layer film being composed of a first layer in the form of a first reflective layer, a second layer in the form of a first light transmitting layer, a third layer in the form of a second reflective layer, a fourth layer in the form of a second light transmitting layer, and a fifth layer in the form of a third reflective layer, in that order from one side of the multi-layer film in the direction of film thickness, the film thickness of each layer that composes the multi-layer film in the first through fifth layers when considering as an optical path length for center wavelength λ of the incident light (that, hereinafter, is also simply referred to as an optical path length), being the film thickness of a value within the range of an integer multiple of λ/4 ± 1% (which, hereinafter, is also referred to as an integer multiple of λ/4 or about integer multiple of λ/4), and, the multi-layer film being composed with a plurality of sets of layers combining a layer H, which is a layer having a higher refractive index and a film thickness of 1/4λ (which, hereinafter, is referred to as a film thickness of 1/4λ in terms of a film thickness of 1/4λ ± 1%), and a layer L, which is a layer having a lower refractive index and a film thickness of 1/4λ ; and,
when multi-layer film A is taken to be a multi-layer film in which five layers of laminated films, namely first through fifth layers, are respectively formed in order from one side in the direction of thickness of the multi-layer film with a first layer composed by laminating three sets of HL layers in which one layer H and one layer L each are combined in that order as one set of HL layer, a second layer composed by laminating 10 sets of HH layers in which one layer H and one layer H are combined as one set of HH layer, a third layer composed by laminating one layer L and seven sets of HL layers, a fourth layer composed by laminating 38 sets of HH layers, and a fifth layer composed by laminating one layer L and 13 sets of HL layers in that order,
when multi-layer film B is taken to be a multi-layer film in which, instead of the second layer formed by laminating 10 sets of HH layers of multi-layer film A, the second layer is formed with a laminated film composed by laminating in order from one side in the direction of thickness of the film, which is the same direction as the case of multi-layer film A, three sets of HH layers, three sets of LL layers in which one layer L and one layer L are combined as one set of LL layer, three sets of HH layers, two sets of LL layers and one set of HH layer in that order,
when multi-layer film C is taken to be a multi-layer film in which, instead of the fourth layer formed by laminating 38 sets of HH layers of multi-layer film A or multi-layer film B, the fourth layer is formed with a laminated film composed by laminating in order from one side in the direction of thickness of the film, which is the same direction as the case of multi-layer film A, three sets of HH layers, three sets of LL layers, three sets of HH layers, three sets of LL layers, three sets of HH layers, three sets of LL layers, three sets of HH layers, three sets of LL layers, three sets of HH layers, three sets of LL layers, three sets of HH layers, three sets of LL layers, three sets of HH layers and three sets of LL layers and two sets of HH layers in that order,
when multi-layer film D is taken to be a multi-layer film in which five layers of laminated films, namely first through fifth layers, are respectively formed in order from one side in the direction of thickness of the multi-layer film with a first layer composed by laminating five sets of LH layers in which one layer L and one layer H each are combined in that order as one set of LH layer, a second layer composed by laminating seven sets of LL layers, a third layer composed by laminating one layer H and seven sets of LH layers, a fourth layer composed by laminating 57 sets of LL layers, and a fifth layer composed by laminating one layer H and 13 sets of LH layers in that order,
when multi-layer film E is taken to be a multi-layer film in which five layers of laminated films, namely first through fifth layers, are respectively formed in order from one side in the direction of thickness of the multi-layer film with a first layer composed by laminating two sets of HL layers, a second layer composed by laminating 14 sets of HH layers, a third layer composed by laminating one layer L and 6 sets of HL layers, a fourth layer composed by laminating 24 sets of HH layers, and a firth layer composed by laminating one layer L and 13 sets of HL layers in that order,
when multi-layer film F is taken to be a multi-layer film in which, instead of the second layer formed by laminating 14 sets of HH layers of multi-layer film E, the second layer is formed with a laminated film composed by laminating in order from one side in the direction of thickness of the film, which is the same direction as the case of multi-layer film E, three sets of HH layers, three sets of LL layers, three sets of HH layers, three sets of LL layers, two sets of HH layers, one set of LL layers and one set of HH layers in that order,
when multi-layer film G is taken to be a multi-layer film in which, instead of the fourth layer formed by laminating 24 sets of HH layers of multi-layer film E or multi-layer film F, the fourth, layer is formed with a laminated film composed by laminating in order from one side in the direction of thickness of the film, which is the same direction as the case of multi-layer film E, three sets of HH layers, three sets of LL layers, three sets of HH layers, three sets of LL layers, three sets of HH layers, three sets of LL layers, three sets of HH layers, three sets of LL layers, two sets of HH layers, one set of LL layers and one set of HH layers in that order, and
when multi-layer film H is taken to be a multi-layer film in which five layers of laminated films, namely first through fifth layers, are respectively formed in order from one side in the direction of thickness of the multi-layer film with a first layer composed by laminating one layer L and four sets of LH layers, a second layer composed by laminating 9 sets of LL layers, a third layer composed by laminating one layer H and six sets of LH layers, a fourth layer composed by laminating 35 sets of LL layers, and a fifth layer composed by laminating one layer H and 13 sets of LH layers,
a multi-layer film element has at least one of mufti-layer films A through H.

6. The optical dispersion compensating element according to claim 3, wherein the layer H which is one of the layer forming the reflective layers and/or the light transmitting layers is formed with a layer comprised of any of Si, Ge, TiO₂, Ta₂O₅ or Nb₂O₅.

7. The optical dispersion compensating element according to claim 3, wherein the layer L which is one of the layer forming the reflective layers and/or light transmitting layers is formed with a layer comprised of material of which optical reflectance is lower than material forming the layer H.

8. The optical dispersion compensating element according to claim 3, wherein a film thickness of at least one laminated film that composes a multi-layer film varies in a direction within the surface in a cross section parallel to the incident surface of light of the multi-layer film (which, hereinafter, is also referred to as a direction within the incident surface), namely, wherein film thickness is not uniform in the direction within the incident surface.

9. The optical dispersion compensating element according to claim 7, wherein the layer L is formed with a layer comprising SiO₂.

10. The optical dispersion compensating element according to claim 8, wherein an adjustment means that adjusts the film thickness of at least one laminated film of the multi-layer film, or an adjustment means that changes the incident position of light in the incident surface of the multi-layer film, is provided by coupling to an element capable of performing dispersion compensation.

11. An optical dispersion compensation method that performs compensation wavelength dispersion (which, hereinafter, is also referred to as dispersion) in optical communications using an optical fiber for the communication transmission path; wherein dispersion compensation is performed by using an optical dispersion compensating element composed by connecting in series along the optical path of the signal light at least two elements capable of performing dispersion compensation comprising a multi-layer film (that, hereinafter, are also referred to as multi-layer film elements), or at least two portions of an element capable of performing dispersion compensation (the above elements capable of performing dispersion compensation and portions of elements capable of performing dispersion compensation will hereinafter be generally referred to as elements capable of performing dispersion compensation).

12. The optical dispersion compensation method according to claim 11, wherein the optical dispersion compensating element composed by connecting a plurality of elements capable of performing dispersion compensation is composed so as to have a group velocity delay time vs. wavelength characteristics curve having at least one extreme value in at least one wavelength range of incident light of wavelength ranges of 1260-1360 nm, 1360-1460 nm, 1460-1530 nm, 1530-1565 nm, 1565-1625 nm, and 1625-1675 nm.

13. The optical dispersion compensation method according to claim 11, wherein at least one of a film thickness of at least one laminated film that composes the multi-layer film varies in a direction within the surface in a cross section parallel to the incident surface of light of the multi-layer film (which, hereinafter, is also referred to as a direction within the incident surface), namely, wherein film thickness is not uniform in the direction within the incident surface.

14. The optical dispersion compensation method according to claim 13, wherein the optical dispersion compensating element is a optical dispersion compensating element comprising an adjustment means that adjusts the film thickness of at least one laminated film of the multi-layer film by coupling to an element capable of performing dispersion compensation, or an adjustment means that changes the incident position of light in the incident surface of the multi-layer film by coupling to an element capable of performing dispersion compensation.
